(19) **Europäisches Patentamt**
**European Patent Office**
**Office européen des brevets**

(11) **EP 4 694 066 A1**

(12) **EUROPEAN PATENT APPLICATION**
published in accordance with Art. 153(4) EPC

(43) Date of publication:
**11.02.2026 Bulletin 2026/07**

(21) Application number: **24802662.7**

(22) Date of filing: **03.04.2024**

(51) International Patent Classification (IPC):
***H04L 41/16*** *(2022.01)*

(52) Cooperative Patent Classification (CPC):
**H04L 41/16; H04L 43/08**

(86) International application number:
**PCT/CN2024/086061**

(87) International publication number:
**WO 2024/230375 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023 CN 202310534752**

(71) Applicant: **Huawei Technologies Co., Ltd.
Shenzhen, Guangdong 518129 (CN)**

(72) Inventors:
• **GUO, Tao
Shenzhen, Guangdong 518129 (CN)**
• **WU, Yizhuang
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **EVALUATION INFORMATION DETERMINATION METHOD, RELATED SYSTEM AND STORAGE MEDIUM**

(57) Embodiments of this application provide an evaluation information determining method, a related system, and a storage medium. The method includes: receiving a first request sent by a second network element, where the first request includes first information, the first information includes a preset parameter, and the preset parameter is used to generate evaluation information; obtaining evaluation information based on the first information, where the evaluation information is used to evaluate a service or a model; and returning the evaluation information to the second network element. In this manner, the preset parameter in the first information sent by the second network element is used to generate evaluation information. In this way, the second network element knows a generation standard of the evaluation information. This can help the second network element select an appropriate first network element.

FIG. 2

**Description**

This application claims priority to Chinese Patent Application No. 202310534752.5, filed with the China National Intellectual Property Administration on May 11, 2023 and entitled "EVALUATION INFORMATION DETERMINING METHOD, RELATED SYSTEM, AND STORAGE MEDIUM", which is incorporated herein by reference in its entirety.

**TECHNICAL FIELD**

This application relates to the field of communication technologies, and in particular, to an evaluation information determining method, a related system, and a storage medium.

**BACKGROUND**

A machine learning (Machine Learning, ML) model and a network data analytics function (Network Data Analytics Function, NWDAF) can be jointly used to provide prediction services in different scenarios. Currently, a service consumer selects an appropriate NWDAF with an analytics logical function (analytics logical function, AnLF) of a model, and invokes a network data analytics function Nnwdaf_AnalyticsSubscription_Subscribe service operation, to subscribe to analytics accuracy information, so that the consumer can check accuracy information and perform allocation. However, accuracy information of a service (for example, an analytics identifier (Identifier, ID)) or a model obtained by the consumer includes a preferred level of accuracy of the analytics (preferred level of accuracy of the analytics) ("Low", "Medium", "High", or "Highest"), defines only a level of accuracy and an accuracy information value, and does not specify a generation standard of the accuracy information.

Because the consumer does not know the generation standard of the accuracy information, the consumer cannot select, based on the information, a more appropriate NWDAF to provide services. In addition, for example, different consumers may have different evaluation criteria for a same analytics ID, and consequently different consumers cannot select an appropriate NWDAF based only on the accuracy information.

**SUMMARY**

This application discloses an evaluation information determining method, a related system, and a storage medium, to help a service consumer select an appropriate NWDAF based on a generation standard that is of evaluation information and that is determined by the service consumer.

According to a first aspect, an embodiment of this application provides an evaluation information determining method, including: A first network element receives a first request sent by a second network element, where the first request includes first information, the first information includes a preset parameter, and the preset parameter is used to generate evaluation information; then the first network element obtains evaluation information based on the first information, where the evaluation information is used to evaluate a service or a model; and the first network element returns the evaluation information to the second network element.

In this embodiment of this application, the first network element obtains the evaluation information based on the first information from the second network element, and returns the evaluation information to the second network element. In this manner, the preset parameter is used to generate evaluation information and is set by the second network element, and the first network element obtains the evaluation information based on the preset parameter. This can help the second network element select an appropriate first network element based on the received evaluation information.

In this example, the first network element is used as an example for description. The first network element can be understood as one network element, or can be understood as a combination of a plurality of network elements, or the like. This is not limited in this solution.

In a possible implementation, the preset parameter is a classification error cost matrix. A classification error cost can be understood as a measure of a loss incurred by a consumer due to receiving a class prediction error. The classification error cost matrix can be used for classification tasks of various analytics services, for example, network element load analytics, abnormal behavior predictions, and measured trends.

Different consumers may have different prediction error cost matrices for a same service or model. Therefore, the evaluation information that meets a requirement of the consumer can be obtained by specifying the preset parameter.

In another possible implementation, the preset parameter is a class weight. The class weight is an importance measure of an output class of a service (for example, an analytics ID) or a model to the consumer. A specific standard of the importance measure is not limited in this solution, and the importance measure may be a relative measure or an absolute measure. Optionally, abnormal behavior analytics support mobility-related anomalies and session-related anomalies. The mobility-related anomalies include abnormal UE locations, abnormal UE wakeup, abnormal radio link failures, and the like. The session-related anomalies include abnormal long-live or large rate flows, abnormal wakeup, suspicion of distributed denial of service attacks (distributed denial of service attack, DDoS), wrong destination addresses, too frequent service access, and the like.

For example, a predicted class of an analytics service is the foregoing abnormal behavior class. Because different consumer network elements have different degrees of attention to the abnormal behavior class, class weights of services that are set by the consumer network elements are different.

In still another possible implementation, the preset parameter is a classification error cost matrix and a class weight.

In a possible implementation, the first information further includes an evaluation information calculation method, and the evaluation information calculation method includes the preset parameter. The evaluation information calculation method is associated with the preset parameter.

The evaluation information calculation method can be understood as a formula, a text, or the like for calculating the evaluation information. For example, the evaluation information calculation method is used to correspondingly evaluate one or more of accuracy, precision, a recall rate, a classification report, a loss function, and the like of the service or the model.

It can be understood that the first information may be corresponding to one information element (information element, IE). For example, one IE includes an accuracy calculation formula, a loss function, and a classification report, and a loss value calculation method includes the class weight and the like.

Alternatively, the first information may be corresponding to a plurality of information elements IEs. For example, the first information is corresponding to two IEs. One IE includes a loss value calculation method, and the other IE includes the class weight and the like.

Certainly, the first information may be alternatively indicated in another manner. This is not limited in this solution.

Optionally, the evaluation information calculation method is F1-score, a loss function, a classification report, or the like. Types of the loss function include a mean squared error loss, a weighted mean squared error loss, a cross-entropy loss, a cost loss, and the like. The classification report indicates a classification result of an NWDAF in a test dataset. The consumer may evaluate performance of the model based on the classification report and internal configurations. For example, accuracy, a recall rate, and the like of the model are calculated based on the classification report. The preset parameter of the evaluation information calculation method may be limits on quantities of various class samples, for example, proportions of the class samples and minimum quantities of the samples.

The evaluation information may be used to measure performance of the service or the model, such as the accuracy, the precision, the recall rate, the classification report, the loss value, and the like. It can be understood that the service is an analytics service provided by the first network element, for example, quality of service (Quality of Service, QoS) analytics, network element load analytics, or abnormal behavior analytics. The model may be a machine learning model used by the first network element to provide the analytics service. For example, the model is a model obtained by the first network element from a third network element.

In a possible implementation, the first network element further obtains the evaluation information based on the first information and a test dataset.

Test data is data used to independently evaluate a trained and verified artificial intelligence system (service or model), to confirm expected performance of the service or the model before the service or the model is used.

In a possible implementation, the test dataset is obtained based on a test dataset identifier, and the first request further includes the test dataset identifier.

In a possible implementation, the first network element returns a degree of association between the evaluation information and the second network element to the second network element.

Optionally, the degree of association is a proportion of data related to the second network element in the test dataset.

In a possible implementation, the data related to the second network element is ground truth data that is of a prediction result of the service or the model and that is obtained by the second network element through subscription. The proportion of the related data is a proportion of the ground truth data in the entire test dataset.

In another possible implementation, the test dataset is a dataset related to the second network element.

In a possible implementation, the first network element sends the first information to a third network element; and the first network element receives the evaluation information sent by the third network element.

In other words, the evaluation information is calculated by the third network element.

In a possible implementation, the first request further includes second information, and the second information indicates to return evaluation association information. The evaluation association information includes evaluation information respectively corresponding to a plurality of time units in a time window. Alternatively, the evaluation association information includes statistical information of evaluation information respectively corresponding to a plurality of time units in a time window. Alternatively, the evaluation association information includes evaluation information respectively corresponding to a plurality of time units in a time window and statistical information of the evaluation information respectively corresponding to the plurality of time units. The first network element returns the evaluation association information to the second network element based on the second information.

The time window may also be referred to as a time interval [start.end], and can be understood as start time and end time in the past, or start time and end time in the future. The time interval may be represented by actual start time and actual end time (for example, Coordinated Universal Time (Coordinated Universal Time, UTC)). By setting start time and end time to a same value, an analytics consumer can request analytics or subscribe to analytics for specific time.

The time units can be understood as a plurality of time periods obtained by dividing the time window. The plurality of time units may be of same duration or different duration. This is not limited in this solution. For example, the time window is as follows: The start time is 12:00 on January 1, 2022, the end time is 12:00 on February 1, 2022, and the time units may be 24 hours, six hours, seven days, one day, one week, one month, or the like. Alternatively, the time units are a series of time points, and are used to divide the time window. For example, if a time point is 00:00 on January 14, 2022, the time window is divided into two time periods. By analogy, there may be a plurality of time points.

The statistical information may be information obtained by processing the evaluation information respectively corresponding to the plurality of time units. For example, the statistical information is variances, means, and the like of the evaluation information respectively corresponding to the plurality of time units, or may be other statistical information. This is not limited in this solution.

In this way, the evaluation association information returned by the first network element to the second network element includes a fluctuation status of the evaluation information. This helps the second network element select an appropriate first network element based on the fluctuation status.

According to a second aspect, an embodiment of this application provides an evaluation information determining method, including: A second network element sends a first request to a first network element, where the first request includes first information, the first information includes a preset parameter, and the preset parameter is used to generate evaluation information; and then the second network element receives evaluation information returned by the first network element, where the evaluation information is obtained by the first network element based on the first information, and the evaluation information is used to evaluate a service or a model.

In this embodiment of this application, the second network element sends the first request to the first network element, where the first request includes the first information, the first information includes the preset parameter, and the preset parameter is used to generate evaluation information; and then the second network element receives the evaluation information returned by the first network element. In this manner, the evaluation information is generated based on the preset parameter in the first information sent by the second network element. In this way, the second network element knows a generation standard of the evaluation information. This can help the second network element select an appropriate first network element.

In a possible implementation, the preset parameter is a classification error cost matrix and/or a class weight.

In a possible implementation, the first information further includes an evaluation information calculation method, and the evaluation information calculation method includes the preset parameter.

In a possible implementation, the evaluation information is obtained by the first network element based on the first information and a test dataset.

In a possible implementation, the test dataset is obtained based on a test dataset identifier, and the first request further includes the test dataset identifier.

In a possible implementation, the second network element further receives a degree of association that is between the evaluation information and the second network element and that is returned by the first network element.

In a possible implementation, the degree of association is a proportion of data related to the second network element in the test dataset, for example, may be a percentage.

In another possible implementation, the test dataset is a dataset related to the second network element.

In a possible implementation, the first request further includes second information, and the second information indicates to return evaluation association information. The evaluation association information includes evaluation information respectively corresponding to a plurality of time units in a time window. Alternatively, the evaluation association information includes statistical information of evaluation information respectively corresponding to a plurality of time units in a time window. Alternatively, the evaluation association information includes evaluation information respectively corresponding to a plurality of time units in a time window and statistical information of the evaluation information respectively corresponding to the plurality of time units. The second network element further receives the evaluation association information returned by the first network element.

In this way, the evaluation association information returned by the first network element to the second network element includes a fluctuation status of the evaluation information. This helps the second network element select an appropriate first network element based on the fluctuation status.

In a possible implementation, the service is an analytics service provided by the first network element, and the model is a machine learning model used by the first network element to provide an analytics service.

According to a third aspect, an embodiment of this application provides an evaluation information determining method, including: A first network element receives a second request sent by a second network element, where the second request includes second information, and the second information indicates to return evaluation association information. The evaluation association information includes evaluation information respectively corresponding to a plurality of time units in a time window. Alternatively, the evaluation association information includes statistical information of evaluation information respectively corresponding to a plurality of time units in a time window. Alternatively, the evaluation association information includes evaluation information respectively corresponding to a plurality of time units in a time window and statistical information of the evaluation information respectively corresponding to the plurality of time units. The evaluation information is used to evaluate a service or a model. The first network element returns the evaluation association information to the second network element based on the second information.

In this way, the evaluation association information returned by the first network element to the second network element includes a fluctuation status of the evaluation information. This helps the second network element select an appropriate first network element based on the fluctuation status.

The time window may also be referred to as a time interval [start.end], and can be understood as start time and end time in the past, or start time and end time in the future. The time interval may be represented by actual start time and actual end time (for example, Coordinated Universal Time (Coordinated Universal Time, UTC)). By setting start time and end time to a same value, an analytics consumer can request analytics or subscribe to analytics for specific time.

The time units can be understood as a plurality of time periods obtained by dividing the time window. The plurality of time units may be of same duration or different duration. This is not limited in this solution. For example, the time window is as follows: The start time is 12:00 on January 1, 2022, the end time is 12:00 on February 1, 2022, and the time units may be 24 hours, six hours, seven days, one day, one week, one month, or the like. Alternatively, the time units are a series of time points, and are used to divide the time window. For example, if a time point is 00:00 on January 14, 2022, the time window is divided into two time periods. By analogy, there may be a plurality of time points.

The statistical information may be information obtained by processing the evaluation information respectively corresponding to the plurality of time units. For example, the statistical information is variances, means, and the like of the evaluation information respectively corresponding to the plurality of time units, or may be other statistical information. This is not limited in this solution.

In a possible implementation, the second request further includes the time window.

Optionally, the second information may further indicate to periodically return the evaluation association information.

In a possible implementation, the second request further includes first information, the first information includes a preset parameter, and the preset parameter is used to generate evaluation information. The first network element further obtains evaluation information based on the first information.

In a possible implementation, the preset parameter is a classification error cost matrix and/or a class weight.

In a possible implementation, the first information further includes an evaluation information calculation method, and the evaluation information calculation method includes the preset parameter.

In a possible implementation, the first network element obtains the evaluation information based on the first information and a test dataset.

In a possible implementation, the first network element sends the first information to a third network element, and then the first network element receives the evaluation information sent by the third network element.

In a possible implementation, the service is an analytics service provided by the first network element, and the model is a machine learning model used by the first network element to provide an analytics service.

According to a fourth aspect, an embodiment of this application provides an evaluation information determining method, including: A second network element sends a second request to a first network element, where the second request includes second information, and the second information indicates to return evaluation association information. The evaluation association information includes evaluation information respectively corresponding to a plurality of time units in a time window. Alternatively, the evaluation association information includes statistical information of evaluation information respectively corresponding to a plurality of time units in a time window. Alternatively, the evaluation association information includes evaluation information respectively corresponding to a plurality of time units in a time window and statistical information of the evaluation information respectively corresponding to the plurality of time units. The evaluation information is used to evaluate a service or a model. The second network element receives the evaluation association information returned by the first network element.

In this embodiment of this application, the second network element sends the request to the first network element, where the request includes the second information, the second information indicates to return the evaluation association information, the evaluation association information includes the evaluation information respectively corresponding to the plurality of time units in the time window and/or the statistical information of the evaluation information respectively corresponding to the plurality of time units, and the evaluation information is used to evaluate the service or the model; and the first network element returns the evaluation association information to the second network element based on the second information. In this way, the evaluation association information returned by the first network element to the second network element includes a fluctuation status of the evaluation information. This helps the second network element select an appropriate first network element based on the fluctuation status.

In a possible implementation, the second request further includes the time window.

In a possible implementation, the second request further includes first information, the first information includes a preset parameter, the preset parameter is used to generate evaluation information, and evaluation information is obtained by the first network element based on the first information.

In a possible implementation, the preset parameter is a classification error cost matrix and/or a class weight.

In a possible implementation, the first information further includes an evaluation information calculation method, and the evaluation information calculation method includes the preset parameter.

In a possible implementation, the evaluation information is obtained by the first network element based on the first information and a test dataset.

In a possible implementation, the service is an analytics service provided by the first network element, and the model is a machine learning model used by the first network element to provide an analytics service.

According to a fifth aspect, this application provides an evaluation information determining method, including: A second network element sends a first request to a first network element, where the first request includes first information, the first information includes a preset parameter, and the preset parameter is used to generate evaluation information; the first network element receives the first request sent by the second network element; the first network element obtains evaluation information based on the first information, where the evaluation information is used to evaluate a service or a model; the first network element returns the evaluation information to the second network element; and the second network element receives the evaluation information returned by the first network element.

In this embodiment of this application, the second network element sends the request to the first network element, where the request includes the first information, the first information includes the preset parameter, and the preset parameter is used to generate evaluation information; the first network element obtains the evaluation information based on the first information, where the evaluation information is used to evaluate the service or the model; and the first network element returns the evaluation information to the second network element. In this manner, the evaluation information is generated based on the preset parameter in the first information sent by the second network element. In this way, the second network element knows a generation standard of the evaluation information. This can help the second network element select an appropriate first network element.

In a possible implementation, the preset parameter is a classification error cost matrix and/or a class weight.

In a possible implementation, the first information further includes an evaluation information calculation method, and the evaluation information calculation method includes the preset parameter.

In a possible implementation, the first request further includes second information, the second information indicates to return evaluation association information, and the evaluation association information includes evaluation information respectively corresponding to a plurality of time units in a time window and/or statistical information of the evaluation information respectively corresponding to the plurality of time units. The first network element further returns the evaluation association information to the second network element; and the second network element further receives the evaluation association information returned by the first network element.

According to a sixth aspect, this application provides an evaluation information determining method, including: A second network element sends a second request to a first network element, where the second request includes second information, the second information indicates the first network element to return evaluation association information, the evaluation association information includes evaluation information respectively corresponding to a plurality of time units in a time window and/or statistical information of the evaluation information respectively corresponding to the plurality of time units, and the evaluation information is used to evaluate a service or a model; the first network element receives the second request sent by the second network element; the first network element returns the evaluation association information to the second network element based on the second information; and the second network element receives the evaluation association information returned by the first network element.

In this embodiment of this application, the second network element sends the request to the first network element, where the request includes the second information, the second information indicates to return the evaluation association information, the evaluation association information includes the evaluation information respectively corresponding to the plurality of time units in the time window and/or the statistical information of the evaluation information respectively corresponding to the plurality of time units, and the evaluation information is used to evaluate the service or the model; and the first network element returns the evaluation association information to the second network element based on the second information. In this way, the evaluation association information returned by the first network element to the second network element includes a fluctuation status of the evaluation information. This helps the second network element select an appropriate first network element based on the fluctuation status.

In a possible implementation, the second request further includes first information, the first information includes a preset parameter, and the preset parameter is used to generate evaluation information. The first network element further obtains evaluation information based on the first information.

In a possible implementation, the preset parameter is a classification error cost matrix and/or a class weight.

In a possible implementation, the first information further includes an evaluation information calculation method, and the evaluation information calculation method includes the preset parameter.

According to a seventh aspect, this application provides an evaluation information determining apparatus. The evaluation information determining apparatus may be any one of an NWDAF, an NF, and an AF, or a chip thereof. The evaluation information determining apparatus includes a unit and/or module configured to perform the evaluation information determining method provided in any one of the first aspect to the sixth aspect or any possible implementation of any one of the first aspect to the sixth aspect, for example, a transceiver unit and/or a processing unit. The transceiver unit is configured to send and receive various type of information or signaling, and therefore can also implement beneficial effects (or advantages) of the evaluation information determining method provided in any one of the foregoing aspects.

According to an eighth aspect, this application provides an evaluation information determining apparatus. The evaluation information determining apparatus may include a processor and a transceiver. The transceiver is configured to send and receive various types of information or signaling. A computer program includes program instructions. When the processor runs the program instructions, the evaluation information determining apparatus is enabled to perform the communication method described in any one of the first aspect to the sixth aspect or any possible implementation of any one of the first aspect to the sixth aspect. The transceiver may be a radio frequency module in the communication apparatus, a combination of a radio frequency module and an antenna, or an input/output interface of a chip or a circuit. Optionally, the evaluation information determining apparatus further includes a memory, and the memory is configured to store the computer program.

According to a ninth aspect, this application provides a readable storage medium. The readable storage medium stores program instructions. When the program instructions are run on a computer, the computer is enabled to perform the evaluation information determining method described in any one of the first aspect to the sixth aspect or any possible implementation of any one of the first aspect to the sixth aspect.

According to a tenth aspect, this application provides a program product including instructions. When the instructions are run, the evaluation information determining method described in any possible implementation of any one of the first aspect to the sixth aspect is performed.

According to an eleventh aspect, this application provides an apparatus. The apparatus may be implemented in a form of a chip, or may be implemented in a form of a device. The apparatus includes a processor. The processor is configured to read a program stored in a memory and execute the program, to perform the evaluation information determining method provided in one or more items in any one of the first aspect to the sixth aspect or one or more items in any possible implementation of any one of the first aspect to the sixth aspect.

Optionally, the apparatus further includes a memory, and the memory is connected to the processor by using a circuit.

Further, optionally, the chip further includes a communication interface, and the processor is connected to the communication interface. The communication interface is configured to receive information and/or signaling that need/needs to be processed. The processor obtains the information and/or signaling from the communication interface, processes the information and/or signaling, and outputs a processing result through the communication interface. The communication interface may be an input/output interface.

Optionally, the processor and the memory may be physically independent units, or the memory may be integrated with the processor.

According to a twelfth aspect, this application provides an evaluation information determining system. The evaluation information determining system includes apparatuses corresponding to the evaluation information determining methods described in the first aspect and the second aspect, or apparatuses corresponding to the evaluation information determining methods described in the third aspect and the fourth aspect.

It can be understood that the apparatus, the computer storage medium, the computer program product, and the like provided above are all configured to perform the method provided in any possible implementation of the first aspect, the method provided in any possible implementation of the second aspect, the method provided in any possible implementation of the third aspect, the method provided in any possible implementation of the fourth aspect, the method provided in any possible implementation of the fifth aspect, and the method provided in any possible implementation of the sixth aspect. Therefore, for beneficial effect that can be achieved by the apparatus, the computer storage medium, the computer program product, and the like, refer to the beneficial effect in the corresponding methods. Details are not described herein again.

## BRIEF DESCRIPTION OF DRAWINGS

The following describes accompanying drawings used in embodiments of this application.

FIG. 1 is diagrams of architectures of interaction between an NWDAF network element and another network element according to an embodiment of this application;

FIG. 2 is a schematic flowchart of an evaluation information determining method according to an embodiment of this application;

FIG. 3 is a schematic flowchart of another evaluation information determining method according to an embodiment of this application;

FIG. 4 is a schematic flowchart of still another evaluation information determining method according to an embodiment of this application;

FIG. 5 is a schematic flowchart of still another evaluation information determining method according to an embodiment of this application;

FIG. 6 is a diagram of a structure of an evaluation information determining apparatus according to an embodiment of this application;

FIG. 7 is a diagram of a structure of another evaluation information determining apparatus according to an embodiment of this application; and

FIG. 8 is a diagram of a structure of still another evaluation information determining apparatus according to an embodiment of this application.

## DESCRIPTION OF EMBODIMENTS

The following describes embodiments of this application with reference to accompanying drawings in embodiments of this application. Terms used in implementations of embodiments of this application are merely intended to interpret specific embodiments of this application, but are not intended to limit this application.

Technical solutions provided in this application can be applied to various communication systems, for example, a long term evolution (long term evolution, LTE) system, an LTE frequency division duplex (frequency division duplex, FDD) system, an LTE time division duplex (time division duplex, TDD) system, an internet of things (internet of things, IoT) system, a narrowband internet of things (narrowband internet of things, NB-IoT) system, wireless fidelity (wireless fidelity, Wi-Fi), a 5th generation (5th generation, 5G) communication system or new radio (new radio, NR), and other future communication systems, for example, a 6th mobile communication system.

A network data analytics function (network data analytics function, NWDAF) network element supports collection of data from another network function and an application function (application function, AF) network element, collection of data from an operation, administration, and maintenance (operation, administration, and maintenance, OAM) network element, and provision of analytics information for the another network function and the AF network element.

The NWDAF network element has functions of data collection, model training, data analytics, and model inference, may be configured to collect related data from a network element, a third-party service server, a terminal device, or a network management system, perform data analytics based on the related data to obtain an analytics result, and provide the analytics result for the network element, the third-party service server, the terminal device, or the network management system. The analytics result may be used to assist a network in selecting a quality-of-service parameter of a service, assist the network in performing traffic routing, assist the network in selecting a background data transfer policy, or the like. In addition, the NWDAF network element may be further configured to collect the related data from the network element, the third-party service server, the terminal device, or the network management system, perform model training based on the related data to obtain an artificial intelligence (artificial intelligence, AI) model or a machine learning (machine learning, ML) model, and provide the AI model/ML model for another NWDAF network element. The AI model/ML model may be used to assist the NWDAF network element in generating a data analytics result based on the related data.

In embodiments of this application, an AnLF NWDAF represents an NWDAF containing an analytics logical function (analytics logical function, AnLF). The AnLF NWDAF is configured to perform inference, derive analytics information (that is, derive statistical information and/or predictions based on analytics consumer requests), and expose analytics services.

An MTLF NWDAF represents an NWDAF containing a model training logical function (model training logical function, MTLF). The MTLF NWDAF is configured to train machine learning ML models and expose new training services, for example, provide a trained ML model.

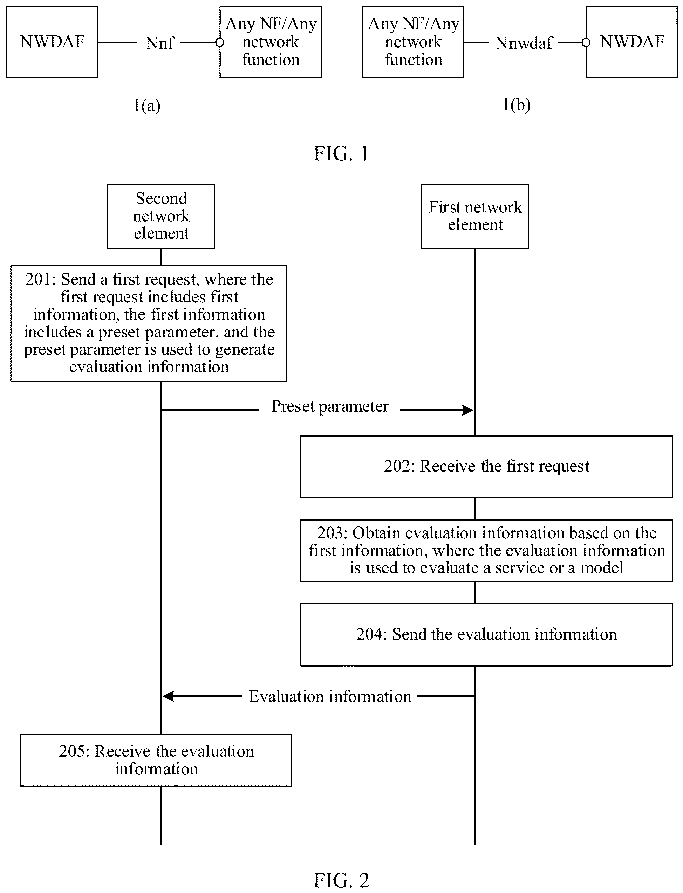

The following details system architectures in embodiments of this application with reference to the accompanying drawings. FIG. 1 is diagrams of architectures of interaction between an NWDAF network element and another network element to which an embodiment of this application is applicable. 1(a) in FIG. 1 shows an architecture used during data collection, that is, an architecture used when the NWDAF network element invokes a service of another network element in a 5G core network to collect input information needed for network analytics. 1(b) in FIG. 1 shows an architecture used during data exposure, that is, an architecture in which the NWDAF network element sends, by providing an NWDAF service, analytics data to a network element that subscribes to or requests the analytics data. An NWDAF represents a network analytics logical function managed by an operator. The NWDAF network element provides network data analytics at a slice level for another network element, provides network analytics information at a network slice instance level (namely, load level information), and does not need to be aware of a current subscriber using the slice. "Any NF" shown in FIG. 1 represents any network function network element, and "Nnf" and "Nnwdaf" represent names of service based interfaces. For details, refer to related descriptions in the 3GPP standard protocol. The details are not described herein.

The foregoing describes the architectures in embodiments of this application. The following details methods in embodiments of this application.

FIG. 2 is a schematic flowchart of an evaluation information determining method according to an embodiment of this application. Optionally, the method can be applied to the foregoing evaluation information determining systems, for example, the evaluation information determining systems shown in FIG. 1. The evaluation information determining method shown in FIG. 2 may include steps 201 to 205. It should be understood that, for ease of description in this application, a sequence of 201 to 205 is used for description, but this does not mean that the method is necessarily performed in the foregoing sequence. An execution sequence, execution time, a quantity of execution times, and the like of the foregoing one or more steps are not limited in embodiments of this application. The following provides descriptions by using an example in which an entity for performing step 201 and step 205 in the evaluation information determining method is a second network element like a service consumer, and an entity for performing steps 202 to 204 is a first network element like an AnLF NWDAF. This application is also applicable to other entities for performing steps. Step 201 to step 205 are specifically as follows:

201: The second network element sends a first request to the first network element, where the first request includes first information, the first information includes a preset parameter, and the preset parameter is used to generate evaluation information.

For example, the first request may be a request for subscribing to analytics evaluation information, for example, an analytics evaluation information subscription service Nnwdaf_AnalyticsSubscription _Subscribe, or may be another request. This is not limited in this solution.

The preset parameter may be used for evaluation information generation. The second network element transfers the preset parameter to the first network element, so that the first network element generates evaluation information based on the preset parameter.

In a possible implementation, the preset parameter is a classification error cost matrix. A classification error cost can be understood as a measure of a predicted cost loss incurred by a consumer due to receiving a class prediction error. Details are listed in Table 1:

Table 1

|  | Class 1 | Class 2 |
|---|---|---|
| Class 1 | 0 | C12 |
| Class 2 | C21 | 0 |

C12 indicates a cost of incorrectly predicting, by a model, a sample whose ground truth label is 1 as a class 2. C21 indicates a cost of incorrectly predicting, by the model, a sample whose ground truth label is 2 as a class 1. A specific error cost calculation method is not limited in this solution. The foregoing measure may be a relative measure or an absolute measure. For example, for a relative measure, a sum of prediction error costs of predicting a class as other classes is 1. For an absolute measure, the consumer may generate a classification error cost matrix according to a local policy based on preconfigured information.

The classification error cost matrix can be used for evaluation of various analytics services or models, for example, network element load analytics, abnormal behavior class predictions, and anomaly trend/level measures. In addition, the service consumer can define a specific value and a proportion of a cost loss caused by a prediction error of an output class of an analytics service or a model. For example, for abnormal behavior analytics, classes of predicted outputs as abnormal behaviors are divided into four levels: high, medium, low, and normal levels. For an analytics service or a model, a cost loss of predicting a high-level anomaly as a low-level anomaly is 1, while a cost of predicting a high-level anomaly as a normal level may be different and may be 3 or the like.

In addition, different network elements may have different security requirements. For example, an anomaly level of an abnormal behavior is high but a prediction result is low, while unified data management (Unified Data Management, UDM) may have a high security requirement and therefore a prediction error cost is low. However, some network elements having low security requirements are sensitive to only high-level abnormal behaviors. When a predicted level is low, the abnormal behavior is ignored, and then security problems are caused, making a prediction error cost quite high. Therefore, for network elements having different security requirements, prediction error costs are different.

For another example, for a binary classification problem, two classes are output. For example, when a 5QI of a GBR resource type is satisfied or exceeded, a QoS flow retainability threshold is reported. C1 indicates satisfaction, and C2 indicates dissatisfaction. C12 indicates a cost of predicting a satisfaction result as a dissatisfaction result by a model, and C21 indicates a cost of predicting a dissatisfaction result as a satisfaction result by the model.

It can be understood that different consumers may have different prediction error cost matrices for a same service or model. Therefore, the evaluation information that meets a requirement of the consumer can be obtained by specifying the preset parameter.

In another possible implementation, the preset parameter is a class weight. The class weight is an importance measure of an output class of a service (for example, an analytics ID) or a model to the consumer. A specific standard of the importance measure is not limited in this solution, and the importance measure may be a relative measure or an absolute measure. For example, for a relative measure, a sum of importance measure values of output classes of an analytics service or a model is 1.

For example, abnormal behavior analytics services support mobility-related anomalies and session-related anomalies. The mobility-related anomalies include abnormal UE locations, abnormal UE wakeup, abnormal radio link failures, and the like. The session-related anomalies include abnormal long-live or large rate flows, abnormal wakeup, suspicion of distributed denial of service attacks (distributed denial of service attack, DDoS), wrong destination addresses, too frequent service access, and the like. Because different consumer network elements have different degrees of attention to the abnormal behavior class, class weights of services that are set by the consumer network elements are different. For example, an AMF (access and mobility management function, access and mobility management function) focuses more on accuracy of abnormal wakeup and abnormal radio link failures, while a session management function (session management function, SMF) focuses more on accuracy of abnormal long-live/large rate flows. Therefore, different consumers have different accuracy requirements for different anomaly types. The AnLF NWDAF needs to select an appropriate model based on a preference criterion of a consumer to provide a more appropriate prediction result.

In still another possible implementation, the preset parameter is a classification error cost matrix and a class weight. A consumer considers both a classification error cost and the class weight.

The foregoing is merely an example. Certainly, the preset parameter may be alternatively another parameter. This is not limited in this solution.

In a possible implementation, the first information further includes an evaluation information calculation method. For example, a generation standard of the evaluation information may be determined based on the evaluation information calculation method and the preset parameter.

The evaluation information calculation method can be understood as a formula or a text for calculating the evaluation information, indication information (indicative of the evaluation information calculation method), or the like.

The evaluation information calculation method includes the preset parameter. It can be understood that, for example, the evaluation information calculation method is a formula. The formula includes an item corresponding to the preset parameter. For example, the preset parameter is a=2, and the formula is L=ax.

It can also be understood that, for example, the evaluation information calculation method is a formula. The formula includes the preset parameter. For example, the preset parameter is a=2, and the formula is L=2x.

In other words, the evaluation information calculation method is associated with the preset parameter. The foregoing is merely an example, and the evaluation information calculation method may be alternatively another manner. This is not limited in this solution.

A receiver can uniquely determine the evaluation information calculation method based on the evaluation information calculation method. If the evaluation information calculation method includes the preconfigured parameter, the first information further includes the corresponding preconfigured parameter.

In a possible implementation, the evaluation information calculation method is indication information. The network element preconfigures a correspondence between indication information and an evaluation information calculation method, and a receiver can uniquely determine the evaluation information calculation method based on the indication information.

For example, the evaluation information calculation method is used to evaluate one or more of accuracy, precision, a recall rate, a classification report, a loss function, robustness, resilience, and the like of the service or the model.

It can be understood that the first information may be corresponding to one information element (information element, IE). To be specific, one information element includes both the evaluation information calculation method and the preset parameter. For example, one IE includes an accuracy calculation formula, a loss function, a weighted loss function, and a classification report. Because the weighted loss function has a preset parameter: a class weight, the IE also includes a specific value of the class weight.

Alternatively, the first information may be corresponding to a plurality of information elements IEs. For example, the first information is corresponding to two IEs. One IE includes the evaluation information calculation method, and the other IE includes the preset parameter. For example, an IE1 includes a weighted loss function, and an IE2 includes a class weight.

Certainly, the first information may be alternatively indicated in another manner. This is not limited in this solution.

Optionally, the evaluation information calculation method is F1-score, a loss function, or the like. Types of the loss function include a mean squared error loss, a weighted mean squared error loss, a cross-entropy loss, a cost loss, a weighted loss, and the like. For example, a preset parameter of a weighted loss function is a class weight. The class weight may be used as a weight of the weighted loss function.

For example, a calculation method of a weighted loss function may be expressed as:

$$L = \sum_{i=0}^{N} Wci * distance \ [Yi, Yi']$$

In the foregoing formula, for a test dataset D, N is a total quantity of samples, Xi is a sample of the test dataset, Yi is a ground truth class of the sample, Yi' is a predicted label of the sample, and Yi is a class element in a class set C. Wci indicates a weight of a class Ci. Distance [Yi, Yi'] represents a distance between the predicted class and the ground truth class of the sample Xi, and may be a mean squared error, an absolute-value error, a Hamming distance, or the like. This is not limited in this solution. A preset parameter of the weighted loss function may be Wci.

For another example, a calculation method of a cost loss function may be expressed as:

$$L = \sum_{i=0}^{N} Cost\_cij[Yi, Yi']$$

In the foregoing formula, for a test dataset D, N is a total quantity of samples, Xi is a sample of the test dataset, Yi is a ground truth class of the sample, Yi' is a predicted label of the sample, and Yi is a class element in a class set C. Cost_cij indicates a cost of incorrectly predicting the sample whose ground truth class is Ci as Cj. A preset parameter of the cost loss function may be a classification error cost matrix, and *Cost_cij* is an element in the classification error cost matrix.

For still another example, a calculation method of a weighted cost loss function may be expressed as:

$$L = \sum_{i=0}^{N} Wci * Cost\_cij[Yi, Yi']$$

In the foregoing formula, for a test dataset D, N is a total quantity of samples, Xi is a sample of the test dataset, Yi is a ground truth class of the sample, Yi' is a predicted label of the sample, and Yi is a class element in a class set C. *Cost_cij* indicates a cost of incorrectly predicting the sample whose ground truth class is Ci as Cj, and Wci indicates a weight of the class Ci. A preset parameter of the weighted cost loss function may be *Cost_cij* and/or Wci.

For another example, the evaluation information calculation method is a classification report. The classification report indicates a classification result of an NWDAF in a test dataset. The consumer may evaluate performance of the model based on the classification report and internal configurations. For example, accuracy, a recall rate, and the like of the model are calculated based on the classification report. The preset parameter of the evaluation information calculation method may be limits on quantities of various class samples, for example, proportions of the class samples and minimum quantities of the samples. For example, a class (class) set of samples in the test dataset is C, where Ci is an element in the set. The classification report includes a quantity of samples whose classes are Ci and that are predicted as samples whose classes are Cj by the model. Optionally, the classification report may be an N*N matrix. As listed in Table 2, N is a quantity of classes of samples, and Cij indicates a quantity of classes i that are predicted as classes j.

Table 2

| Predicted/Ground truth | Class 1 | Class 2 | Class 3 |
|---|---|---|---|
| Class 1 | C11 | C12 | C13 |
| Class 2 | C21 | C22 | C23 |
| Class 3 | C31 | C32 | C33 |

The foregoing is merely an example, and the evaluation information calculation method may be alternatively another calculation method. For example, an accuracy information calculation method is a ratio of a quantity of correctly predicted samples to (a sum of the quantity of correctly predicted samples and a quantity of incorrectly predicted samples), or the like. This is not limited in this solution.

202: The first network element receives the first request sent by the second network element.

203: The first network element obtains the evaluation information based on the first information, where the evaluation information is used to evaluate a service or a model.

Correspondingly, the evaluation information may be used to measure performance of the service or the model, such as the accuracy, the precision, the recall rate, the classification report, the loss value, and the like. Alternatively, the evaluation information may be used for model training.

It can be understood that the service is an analytics service provided by the first network element, for example, quality of service (Quality of Service, QoS) analytics, network element load analytics, or abnormal behavior analytics. The model may be a machine learning model.

In a possible implementation, the first network element calculates the evaluation information based on the first information and a test dataset.

Test data is data used to independently evaluate a trained and verified artificial intelligence system (service or model), to confirm expected performance of the service or the model before the service or the model is used.

Specifically, when the preset parameter is a classification error cost matrix, the first network element may calculate the evaluation information based on the classification error cost matrix and the test dataset. Optionally, the first network element and the second network element preconfigure the evaluation information calculation method, or the second network element stores the corresponding evaluation information calculation method. In this way, the first network element may calculate the evaluation information based on the evaluation information calculation method, the classification error cost matrix, and the test dataset. Certainly, the evaluation information may be alternatively obtained in another manner. This is not limited in this solution.

The test dataset is obtained by the first network element based on a test dataset identifier, and the first request sent by the second network element further includes the test dataset identifier.

Certainly, when the first request does not include the test dataset identifier, the test dataset may be alternatively proactively collected by the first network element. This is not limited in this solution. The first network element obtains a proportion of data related to the second network element in the test dataset, and returns the proportion to the second network element. In this way, the second network element knows a degree of association between the evaluation information and the second network element. This helps select an appropriate NWDAF.

In a possible implementation, the data related to the consumer is ground truth data that is of a prediction result of the service or the model and that is obtained by the consumer through subscription. The proportion of the related data is a proportion of the ground truth data in the entire test dataset.

Certainly, the first network element may alternatively collect only a dataset related to the second network element as the test dataset.

In another possible implementation, the first network element sends the first information to a third network element, and then receives the evaluation information returned by the third network element.

Optionally, the first network element sends the first information and the test dataset to the third network element, and then receives the evaluation information returned by the third network element. For descriptions of the test dataset, refer to the foregoing descriptions. Details are not described herein again. The third network element may evaluate a trained model based on the first information and the test dataset.

Optionally, the third network element may be an MTLF NWDAF.

For example, the MTLF NWDAF sets the first information as a hyperparameter used during model training. Specifically, the MTLF NWDAF uses, for example, the class weight as a parameter in the weighted loss function at a model training phase. Then, the MTLF NWDAF obtains the model based on the first information.

The third network element may further obtain the evaluation information calculation method based on the first information, and then obtain the evaluation information of the model based on the test dataset.

It should be noted that in this solution, the first network element and the third network element may be a same network element, or may be different network elements. This is not limited in this solution.

204: The first network element returns the evaluation information to the second network element.

After obtaining the evaluation information, the first network element sends the evaluation information to the second network element.

In a possible implementation, the first network element further returns the degree of association between the evaluation information and the second network element to the second network element.

For example, the first network element returns the proportion of the data related to the second network element in the test dataset, or other related information. This is not limited in this solution.

205: The second network element receives the evaluation information returned by the first network element.

In a possible implementation, the second network element determines, based on the evaluation information, whether the first network element is a network element meeting a requirement. For example, the second network element selects, based on evaluation information returned by a plurality of first network elements, an appropriate first network element and a model, a service, and the like corresponding to the first network element.

In a possible implementation, the first request further includes second information, the second information indicates the first network element to return evaluation association information, the evaluation association information includes evaluation information respectively corresponding to a plurality of time units in a time window and/or statistical information of the evaluation information respectively corresponding to the plurality of time units, and the evaluation information is used to evaluate a service or a model.

The time window may also be referred to as a time interval [start.end], and can be understood as start time and end time in the past, or start time and end time in the future. The time interval may be represented by actual start time and actual end time (for example, Coordinated Universal Time (Coordinated Universal Time, UTC)). By setting start time and end time to a same value, an analytics consumer can request analytics or subscribe to analytics for specific time.

The time units can be understood as a plurality of time periods obtained by dividing the time window. The plurality of time units may be of same duration or different duration. This is not limited in this solution. For example, the time window is as follows: The start time is 12:00 on January 1, 2022, the end time is 12:00 on February 1, 2022, and the time units may be 24 hours, six hours, seven days, one day, one week, one month, or the like. Alternatively, the time units are a series of time points, and are used to divide the time window. For example, if a time point is 00:00 on January 14, 2022, the time window is divided into two time periods. By analogy, there may be a plurality of time points.

The statistical information may be information obtained by processing the evaluation information respectively corresponding to the plurality of time units. For example, the statistical information is variances, means, and the like of the evaluation information respectively corresponding to the plurality of time units, or may be other statistical information. This is not limited in this solution.

Optionally, the evaluation association information may be alternatively evaluation information respectively corresponding to a plurality of time units in a time window, statistical information of the evaluation information respectively corresponding to the plurality of time units, and/or the like that are/is periodically returned. This is not limited in this solution.

Certainly, the second information may be alternatively carried in another request. This is not limited in this solution.

Correspondingly, step 204 may include: The first network element returns the evaluation association information to the second network element.

The first network element obtains the evaluation information respectively corresponding to the plurality of time units in the time window and/or the statistical information of the evaluation information respectively corresponding to the plurality of time units.

The first network element may calculate the evaluation association information, or may obtain the evaluation association information from the third network element. This is not limited in this solution.

In other words, the first network element may first obtain the evaluation information respectively corresponding to the plurality of time units in the time window, and then return the obtained evaluation information respectively corresponding to the plurality of time units to the second network element.

Alternatively, the first network element may first obtain the evaluation information respectively corresponding to the plurality of time units in the time window, then process the evaluation information respectively corresponding to the plurality of time units to obtain the statistical information, and return the statistical information to the second network element.

Step 205 may include: The second network element receives the evaluation association information returned by the first network element.

In a possible implementation, the first request further includes the time window.

In this embodiment of this application, the second network element sends the request to the first network element, where the request includes the first information, the first information includes the preset parameter, and the preset parameter is used to generate evaluation information; the first network element obtains the evaluation information based on the first information, where the evaluation information is used to evaluate the service or the model; and the first network element returns the evaluation information to the second network element. In this manner, the evaluation information is generated based on the preset parameter in the first information sent by the second network element. In this way, the second network element knows a generation standard of the evaluation information. This can help the second network element select an appropriate first network element.

The embodiment shown in FIG. 2 describes the evaluation information determining method in this solution. The following describes the technical solutions with reference to an example 1 and an example 2.

Example 1

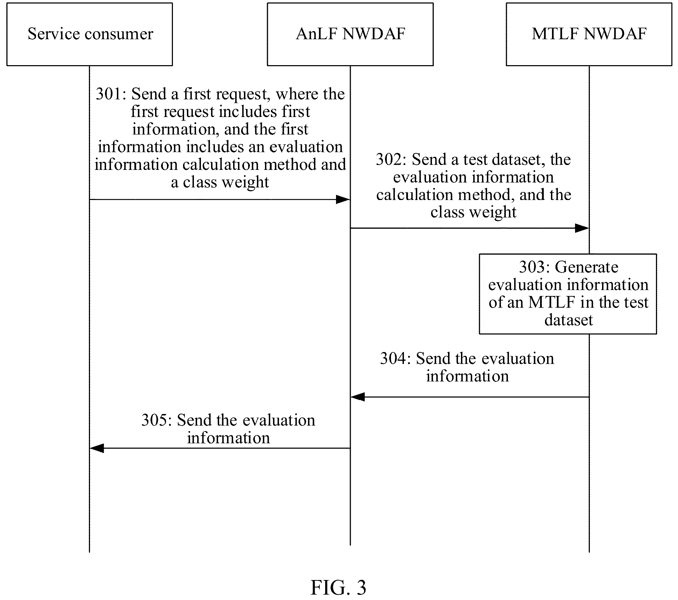

FIG. 3 is a diagram of an evaluation information determining scheme according to an embodiment of this application. The method may include steps 301 to 305, which are specifically as follows:
301: A service consumer sends a first request to an AnLF NWDAF, where the first request includes first information.

The first information includes an evaluation information calculation method and a class weight, and the evaluation information calculation method includes the class weight.

For example, the evaluation information calculation method includes a weighted cost loss function, which may be expressed as:

$$L = \sum_{i=0}^{N} Wci * Cost\_cij[Yi, Yi']$$

In the foregoing formula, for a test dataset D, N is a total quantity of samples, Xi is a sample of the test dataset, Yi is a ground truth class of the sample, Yi' is a predicted label of the sample, and Yi is a class element in a class set C. *Cost_cij* indicates a cost of incorrectly predicting the sample whose ground truth class is Ci as Cj, and Wci indicates a weight of the class Ci.

A preset parameter of the weighted cost loss function may be *Cost_cij* and/or Wei.

302: The AnLF NWDAF receives the first request, and sends the evaluation information calculation method and the class weight to an MTLF NWDAF.

The AnLF NWDAF may further obtain a test dataset, and send the test dataset to the MTLF NWDAF.

303: The MTLF NWDAF generates evaluation information based on the received test dataset, the received evaluation information calculation method, and the received class weight.

Because the consumer configures the preset parameter, the MTLF NWDAF can obtain the evaluation information based on the evaluation information calculation method, the preset weight value, and the test dataset.

For the implementation process, refer to the descriptions of the embodiment shown in FIG. 2. Details are not described herein again.

304: The MTLF NWDAF sends the evaluation information to the AnLF NWDAF.

305: The AnLF NWDAF returns the evaluation information to the service consumer.

In this example, the service consumer provides the AnLF NWDAF with the evaluation information calculation method and the class weight. In this way, the service consumer knows a generation standard of the evaluation information. This can help the service consumer select an appropriate NWDAF based on the evaluation information.

Example 2

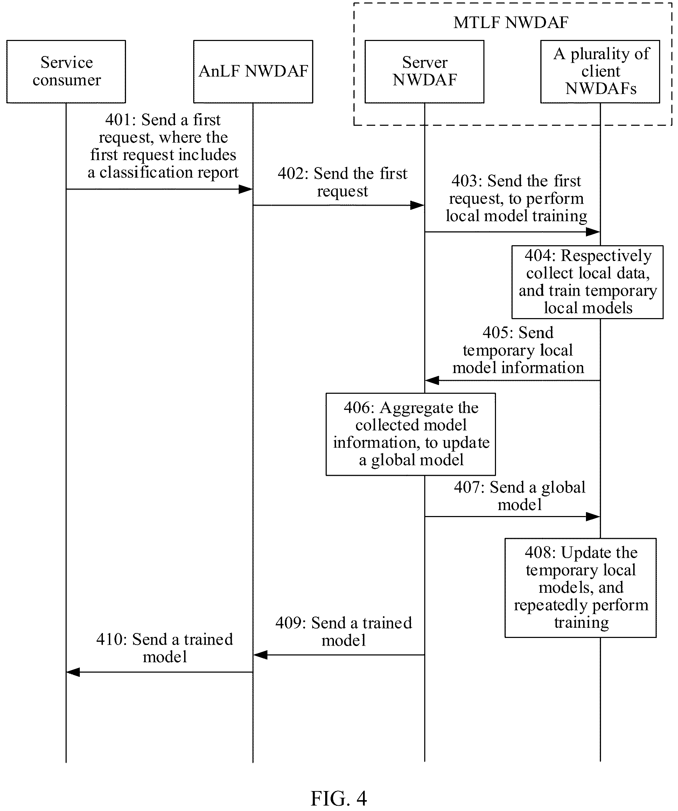

FIG. 4 is a diagram of an evaluation information determining scheme according to an embodiment of this application. The method may include steps 401 to 410, which are specifically as follows:

401: A service consumer sends a first request to an AnLF NWDAF, where the first request includes a classification report.

In this example, the classification report is used as an example for description. For descriptions of the classification report, refer to the descriptions of the embodiment shown in FIG. 2. Details are not described herein again.

402: The AnLF NWDAF receives the first request, and sends the first request to an MTLF NWDAF, to obtain an ML model.

Optionally, the first request may include an analytics ID, model metrics (for example, accuracy, precision, a recall rate, the classification report, and a loss), model metric configurations (a class weight, a cost metric, and the like), predetermined statuses (for example, a requested accuracy level and/or a total training time) and/or periodic reporting conditions (for example, a quantity of training rounds/training time), and a test dataset.

For example, the NWDAF containing an AnLF sends a subscription request to the NWDAF containing an MTLF by using an Nnwdaf_MLModelProvision service.

When the request sent by the service consumer indicates that there is a test dataset, the AnLF NWDAF sends the test dataset to the MTLF NWDAF. When the service consumer does not indicate a test dataset, the AnLF NWDAF obtains the test dataset by itself. For descriptions of this part, refer to the descriptions of the embodiment shown in FIG. 2. Details are not described herein again.

When accuracy metrics are requested, the accuracy level may be used to indicate a target accuracy level in a training process. When the requested accuracy level is achieved in the training process, a federated learning (Federated Learning, FL) server NWDAF included in the MTLF NWDAF may stop the training process.

If the NWDAF containing the AnLF or a consumer of the NWDAF containing the AnLF provides a time during which analytics information is needed, the server NWDAF may determine maximum response times of client NWDAFs of the server NWDAF based on the time.

403: The server NWDAF sends the first request to the client NWDAFs participating in federated learning, to perform local model training of the federated learning.

The request may include the foregoing model metrics (for example, the classification report) and the foregoing model metric configuration.

Further, the first request may further include maximum response times that are of temporary local ML model information and that need to be reported by the client NWDAFs to the server NWDAF.

404: The plurality of client NWDAFs receive the first request and collect local data of the client NWDAFs.

405: Each client NWDAF trains, based on the data collected by the client NWDAF, the ML model obtained from the server NWDAF, and sends the temporary local ML model information to the server NWDAF.

In the federated learning training process, each client NWDAF trains the model based on the data collected by the client NWDAF.

Each client NWDAF further calculates local model metrics (for example, the classification report) and sends the local model metrics to the server NWDAF.

For example, the client NWDAFs generate models based on the local data of the client NWDAFs, and generate the classification report based on the local models and local test datasets. The classification report indicates a performance measurement result of each local model in a corresponding local test dataset.

If the server NWDAF specifies the test dataset in the first request, the client NWDAFs generate the classification report based on the local models and the specified test dataset.

The local model metrics may be carried in a local training status report. The local model metrics may include a report of model training datasets, a quantity of samples, and the classification report of the test datasets. The local training status report may further include other information about local training in the client NWDAFs, for example, characteristics (such as an area, a sampling ratio, and maximum values/minimum values in all dimensions of data) of the local training dataset.

The ML models are sent from the client NWDAFs to the server NWDAF in the FL training process. The ML models are information needed by the server NWDAF to build an aggregated model based on locally trained models.

If a client NWDAF cannot complete training of a temporary local ML model within a maximum response time provided by the server NWDAF, the client NWDAF notifies the server NWDAF of a delay event and provides appropriate cause information. For example, if the local ML model training fails, more time is needed for the local ML model training before the maximum response time ends.

406: The server NWDAF aggregates the obtained ML model information of all the clients, to update a global ML model.

The server NWDAF aggregates all the model information based on the classification report returned by the client NWDAFs, to obtain the global ML model.

The server NWDAF may further calculate global model metrics, for example, based on the local model metrics or by applying the global model to the test dataset. For example, the server NWDAF verifies the test dataset provided by the consumer, and generates evaluation information.

If the server NWDAF provides the client NWDAFs with the maximum response times, the server NWDAF determines to wait for a client NWDAF that has not provided a temporary local ML model of the client NWDAF within a maximum response time, or aggregate only obtained local ML model information instances to update the global ML model and the like. This is not limited in this solution.

In a possible implementation, based on the consumer request, the server NWDAF updates a training status (for example, the global model metrics) to the consumer periodically (for example, a specific quantity of training rounds or every 10 minutes) or dynamically when some predetermined statuses are achieved (for example, the requested accuracy level is achieved or the training time expires).

In a possible implementation, the consumer determines whether the current model fulfils a requirement. For example, the global model metrics are satisfactory for the consumer. In this case, the consumer can modify subscription (stop or continue the training process).

In a possible implementation, the server NWDAF updates or terminates the current FL training process based on the received request.

If the FL process continues, the server NWDAF sends the aggregated ML model information to each client NWDAF for a next round of model training.

407: The server NWDAF sends the global ML model to each client NWDAF.

408: Each client NWDAF receives the global ML model to update the ML model of the client NWDAF.

Then, a plurality of training iterations are performed.

409: After the training ends, the server NWDAF returns a trained model to the AnLF NWDAF.

410: The AnLF NWDAF returns the model to the service consumer.

In this example, the service consumer sends the classification report to the AnLF NWDAF, so that the MTLF NWDAF generates the global ML model based on the classification report.

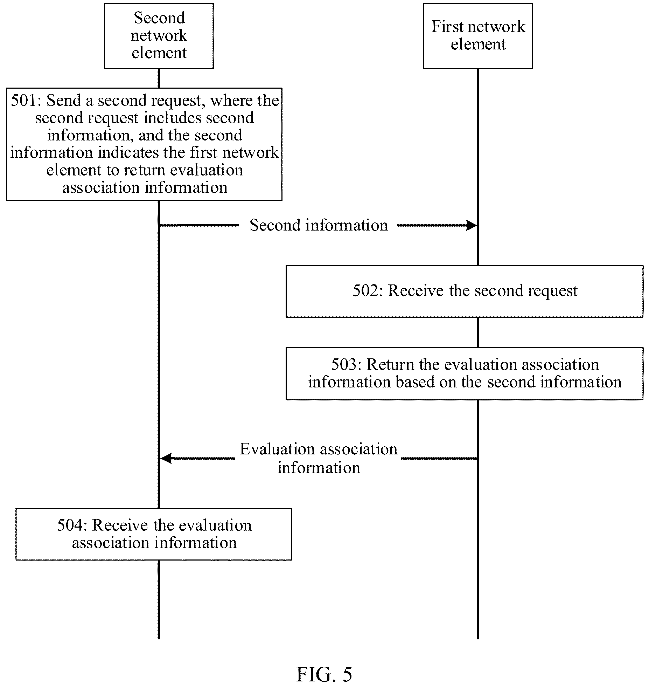

FIG. 5 is a schematic flowchart of another evaluation information determining method according to an embodiment of this application. Optionally, the method can be applied to the foregoing interaction system, for example, the interaction systems shown in FIG. 1. The evaluation information determining method shown in FIG. 5 may include steps 501 to 504. It should be understood that, for ease of description in this application, a sequence of 501 to 504 is used for description, but this does not mean that the method is necessarily performed in the foregoing sequence. An execution sequence, execution time, a quantity of execution times, and the like of the foregoing one or more steps are not limited in embodiments of this application. The following provides descriptions by using an example in which an entity for performing step 501 and step 504 in the evaluation information determining method is a second network element like a service consumer, and an entity for performing steps 502 and 503 is a first network element like an AnLF NWDAF. This application is also applicable to other entities for performing steps. Step 501 to step 504 are specifically as follows:

501: The second network element sends a second request to the first network element, where the second request includes second information, the second information indicates the first network element to return evaluation association information, the evaluation association information includes evaluation information respectively corresponding to a plurality of time units in a time window and/or statistical information of the evaluation information respectively corresponding to the plurality of time units, and the evaluation information is used to evaluate a service or a model.

The second request may be, for example, a request for subscribing to analytics evaluation information.

The evaluation information may be used to evaluate accuracy, precision, a recall rate, and the like of the service or the model. Alternatively, the evaluation information may be used for model training.

The service is an analytics service provided by the first network element, and the model is a machine learning model used by the first network element to provide an analytics service.

The time window may also be referred to as a time interval [start.end], and can be understood as start time and end time in the past, or start time and end time in the future. The time interval may be represented by actual start time and actual end time (for example, Coordinated Universal Time (Coordinated Universal Time, UTC)). By setting start time and end time to a same value, an analytics consumer can request analytics or subscribe to analytics for specific time.

The time units can be understood as a plurality of time periods obtained by dividing the time window. The plurality of time units may be of same duration or different duration. This is not limited in this solution. For example, the time window is as follows: The start time is 12:00 on January 1, 2022, the end time is 12:00 on February 1, 2022, and the time units may be 24 hours, six hours, seven days, one day, one week, one month, or the like. Alternatively, the time units are a series of time points, and are used to divide the time window. For example, if a time point is 00:00 on January 14, 2022, the time window is divided into two time periods. By analogy, there may be a plurality of time points.

The statistical information may be information obtained by processing the evaluation information respectively corresponding to the plurality of time units. For example, the statistical information is variances, means, and the like of the evaluation information respectively corresponding to the plurality of time units, or may be other statistical information. This is not limited in this solution.

Optionally, the evaluation association information may be alternatively evaluation information respectively corresponding to a plurality of time units in a time window, statistical information of the evaluation information respectively corresponding to the plurality of time units, and/or the like that are/is periodically returned. This is not limited in this solution.

In a possible implementation, the second request further includes the time window.

502: The first network element receives the second request sent by the second network element.

503: The first network element returns the evaluation association information to the second network element based on the second information.

The first network element obtains the evaluation information respectively corresponding to the plurality of time units in the time window and/or the statistical information of the evaluation information respectively corresponding to the plurality of time units.

The first network element may calculate the evaluation association information, or may obtain the evaluation association information from a third network element. This is not limited in this solution.

In other words, the first network element may first obtain the evaluation information respectively corresponding to the plurality of time units in the time window, and then return the obtained evaluation information respectively corresponding to the plurality of time units to the second network element.

Alternatively, the first network element may first obtain the evaluation information respectively corresponding to the plurality of time units in the time window, then process the evaluation information respectively corresponding to the plurality of time units to obtain the statistical information, and return the statistical information to the second network element.

For a specific implementation of obtaining the evaluation information, refer to the descriptions of the embodiment shown in FIG. 2. Details are not described herein again.

504: The second network element receives the evaluation association information returned by the first network element.

In a possible implementation, the second network element determines, based on the evaluation association information, whether the first network element is a network element meeting a requirement. For example, the second network element selects, based on evaluation association information returned by a plurality of first network elements, an appropriate first network element and a model, a service, and the like corresponding to the first network element. For example, the second network element selects, from variances of evaluation information returned by the plurality of first network elements, a first network element with a minimum variance to provide services, unsubscribes from an analytics service of another first network element, and the like.

In a possible implementation, the second request further includes first information, and the first information includes a preset parameter.

For example, the preset parameter is one or more of a classification error cost matrix and a class weight.

For descriptions of this part, refer to the descriptions of the embodiment shown in FIG. 2. Details are not described herein again.

In this embodiment of this application, the second network element sends the request to the first network element, where the request includes the second information, the second information indicates to return the evaluation association information, the evaluation association information includes the evaluation information respectively corresponding to the plurality of time units in the time window and/or the statistical information of the evaluation information respectively corresponding to the plurality of time units, and the evaluation information is used to evaluate the service or the model; and the first network element returns the evaluation association information to the second network element based on the second information. In this way, the evaluation association information returned by the first network element to the second network element includes a fluctuation status of the evaluation information. This helps the second network element select an appropriate first network element based on the fluctuation status.

It should be noted that in embodiments of this application, unless otherwise specified or there is a logical conflict, terms and/or descriptions in embodiments are consistent and may be mutually referenced, and technical features in different embodiments may be combined into a new embodiment based on an internal logical relationship between the technical features.

The foregoing details the methods in embodiments of this application. The following provides apparatuses in embodiments of this application. It can be understood that in the apparatus embodiments of this application, division into a plurality of units or modules is merely logical division based on functions, and is not intended to limit specific structures of the apparatuses. During specific implementation, some functional modules may be subdivided into more functional modules that are smaller, and some functional modules may also be combined into one functional module. However, regardless of whether these functional modules are subdivided or combined, general procedures performed by the apparatuses are the same. For example, some apparatuses include a receiving unit and a sending unit. In some designs, the sending unit and the receiving unit may be alternatively integrated into a communication unit, and the communication unit may implement functions implemented by the receiving unit and the sending unit. Usually, each unit is corresponding to respective program code (or program instructions). When the program code corresponding to the units is run on a processor, the units are controlled by a processing unit to perform corresponding procedures, to implement corresponding functions.

An embodiment of this application further provides an apparatus configured to implement any one of the foregoing methods. For example, an evaluation information determining apparatus is provided, including a module (or means) configured to implement the steps performed by the first network element (for example, the AnLF NWDAF) in any one of the foregoing methods. For another example, another evaluation information determining apparatus is further provided, including a module (or means) configured to implement the steps performed by the second network element (for example, the service consumer) in any one of the foregoing methods.

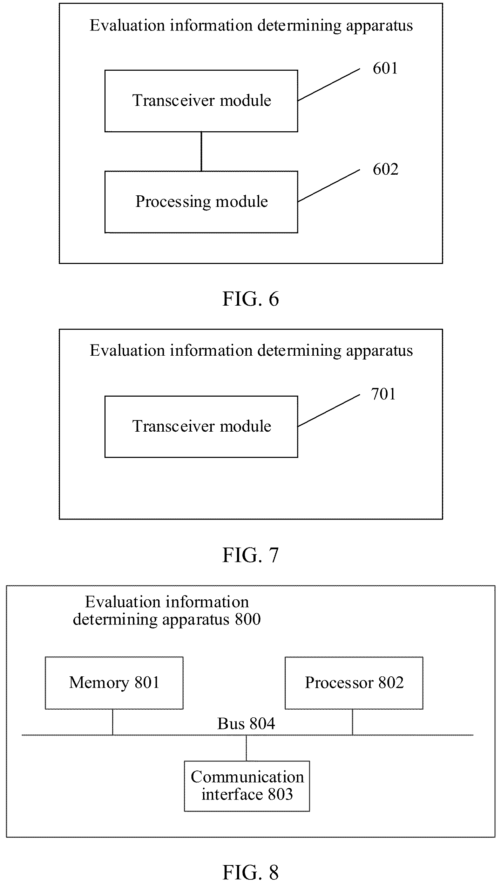

For example, FIG. 6 is a diagram of a structure of an evaluation information determining apparatus according to an embodiment of this application. The evaluation information determining apparatus is configured to implement the foregoing evaluation information determining methods, for example, the evaluation information determining methods shown in FIG. 2, FIG. 3, and FIG. 4.

As shown in FIG. 6, the apparatus may include a transceiver module 601 and a processing module 602. Details are as follows:

The transceiver module 601 is configured to receive a first request sent by a second network element, where the first request includes first information, the first information includes a preset parameter, and the preset parameter is used to generate evaluation information.

The processing module 602 is configured to obtain evaluation information based on the first information, where the evaluation information is used to evaluate a service or a model.

The transceiver module 601 is further configured to return the evaluation information to the second network element.

In a possible implementation, the preset parameter is a classification error cost matrix and/or a class weight.

In a possible implementation, the first information further includes an evaluation information calculation method, and the evaluation information calculation method includes the preset parameter.

In a possible implementation, the processing module 602 is configured to obtain the evaluation information based on the first information and a test dataset.

In a possible implementation, the test dataset is obtained based on a test dataset identifier, and the first request further includes the test dataset identifier.

In a possible implementation, the transceiver module 601 is further configured to return a degree of association between the evaluation information and the second network element to the second network element.

In a possible implementation, the degree of association is a proportion of data related to the second network element in the test dataset.

In a possible implementation, the test dataset is a dataset related to the second network element.

In a possible implementation, the processing module 602 is configured to: send the first information to a third network element; and receive the evaluation information sent by the third network element.

In a possible implementation, the first request further includes second information, the second information indicates to return evaluation association information, and the evaluation association information includes evaluation information respectively corresponding to a plurality of time units in a time window and/or statistical information of the evaluation information respectively corresponding to the plurality of time units. The transceiver module 601 is further configured to return the evaluation association information to the second network element based on the second information.

In a possible implementation, the service is an analytics service provided by a first network element, and the model is a machine learning model used by the first network element to provide an analytics service.

For another example, FIG. 7 is a diagram of a structure of another evaluation information determining apparatus according to an embodiment of this application. The evaluation information determining apparatus is configured to implement the foregoing evaluation information determining methods, for example, the evaluation information determining methods shown in FIG. 2, FIG. 3, and FIG. 4.

As shown in FIG. 7, the apparatus may include a transceiver module 701. Details are as follows:
The transceiver module 701 is configured to send a first request to a first network element, where the first request includes first information, the first information includes a preset parameter, and the preset parameter is used to generate evaluation information.

The transceiver module 701 is further configured to receive evaluation information returned by the first network element, where the evaluation information is obtained by the first network element based on the first information, and the evaluation information is used to evaluate a service or a model.

In a possible implementation, the preset parameter is a classification error cost matrix and/or a class weight.

In a possible implementation, the first information further includes an evaluation information calculation method, and the evaluation information calculation method includes the preset parameter.

In a possible implementation, the evaluation information is obtained by the first network element based on the first information and a test dataset.

In a possible implementation, the test dataset is obtained based on a test dataset identifier, and the first request further includes the test dataset identifier.

In a possible implementation, the transceiver module 701 is further configured to receive a degree of association that is between the evaluation information and a second network element and that is returned by the first network element.

In a possible implementation, the degree of association is a proportion of data related to the second network element in the test dataset.

In a possible implementation, the test dataset is a dataset related to the second network element.

In a possible implementation, the first request further includes second information, the second information indicates to return evaluation association information, and the evaluation association information includes evaluation information respectively corresponding to a plurality of time units in a time window and/or statistical information of the evaluation information respectively corresponding to the plurality of time units.

The transceiver module 701 is further configured to receive the evaluation association information returned by the first network element.

In a possible implementation, the service is an analytics service provided by the first network element, and the model is a machine learning model used by the first network element to provide an analytics service.

For another example, FIG. 7 is used again. The evaluation information determining apparatus is configured to implement the foregoing evaluation information determining methods, for example, the evaluation information determining method shown in FIG. 5.

The transceiver module 701 is configured to receive a second request sent by a second network element, where the second request includes second information, the second information indicates to return evaluation association information, the evaluation association information includes evaluation information respectively corresponding to a plurality of time units in a time window and/or statistical information of the evaluation information respectively corresponding to the plurality of time units, and the evaluation information is used to evaluate a service or a model.

The transceiver module 701 is further configured to return the evaluation association information to the second network element based on the second information.

In a possible implementation, the second request further includes the time window.

In a possible implementation, the second request further includes first information, the first information includes a preset parameter, and the preset parameter is used to generate evaluation information. A processing module is further included, and is configured to obtain evaluation information based on the first information.

In a possible implementation, the preset parameter is a classification error cost matrix and/or a class weight.

In a possible implementation, the first information further includes an evaluation information calculation method, and the evaluation information calculation method includes the preset parameter.

In a possible implementation, the processing module is configured to obtain the evaluation information based on the first information and a test dataset.

In a possible implementation, the processing module is configured to: send the first information to a third network element; and receive the evaluation information sent by the third network element.

In a possible implementation, the service is an analytics service provided by a first network element, and the model is a machine learning model used by the first network element to provide an analytics service.

For still another example, FIG. 7 is used again. FIG. 7 is a diagram of a structure of another evaluation information determining apparatus according to an embodiment of this application. The evaluation information determining apparatus is configured to implement the foregoing evaluation information determining methods, for example, the evaluation information determining method shown in FIG. 5.

The transceiver module 701 is configured to send a second request to a first network element, where the second request includes second information, the second information indicates to return evaluation association information, the evaluation association information includes evaluation information respectively corresponding to a plurality of time units in a time window and/or statistical information of the evaluation information respectively corresponding to the plurality of time units, and the evaluation information is used to evaluate a service or a model.

The transceiver module 701 is further configured to receive the evaluation association information returned by the first network element.

In a possible implementation, the second request further includes the time window.

In a possible implementation, the second request further includes first information, the first information includes a preset parameter, the preset parameter is used to generate evaluation information, and evaluation information is obtained by the first network element based on the first information.

In a possible implementation, the preset parameter is a classification error cost matrix and/or a class weight.

In a possible implementation, the first information further includes an evaluation information calculation method, and the evaluation information calculation method includes the preset parameter.

In a possible implementation, the evaluation information is obtained by the first network element based on the first information and a test dataset.

In a possible implementation, the service is an analytics service provided by the first network element, and the model is a machine learning model used by the first network element to provide an analytics service.

For descriptions of the foregoing modules, refer to the descriptions in the foregoing methods. Details are not described herein again.

It should be understood that division into the modules in the foregoing apparatuses is merely logical function division. During actual implementation, all or some of the modules may be integrated into one physical entity, or may be physically separated. In addition, the modules in the evaluation information determining apparatus may be implemented in a form of software invoked by a processor. For example, the evaluation information determining apparatus includes a processor, the processor is connected to a memory, the memory stores instructions, and the processor invokes the instructions stored in the memory, to implement any one of the foregoing methods or implement functions of the modules of the apparatus. The processor is, for example, a general-purpose processor, like a central processing unit (central processing unit, CPU) or a microprocessor. The memory is a memory inside the apparatus or a memory outside the apparatus. Alternatively, the modules in the apparatus may be implemented in a form of a hardware circuit, and functions of some or all units may be implemented by designing the hardware circuit. The hardware circuit can be understood as one or more processors. For example, in an implementation, the hardware circuit is an application-specific integrated circuit (application-specific integrated circuit, ASIC), and the functions of the some or all of the units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of the some or all of the units. All modules of the foregoing apparatuses may be implemented in a form of software invoked by a processor, all modules may be implemented in a form of a hardware circuit, or some modules may be implemented in a form of software invoked by a processor and some other modules may be implemented in a form of a hardware circuit.

FIG. 8 is a diagram of a hardware structure of still another evaluation information determining apparatus according to an embodiment of this application. The evaluation information determining apparatus 800 (the apparatus 800 may be specifically a computer device) shown in FIG. 8 includes a memory 801, a processor 802, a communication interface 803, and a bus 804. The memory 801, the processor 802, and the communication interface 803 implement mutual communication connections through the bus 804.

The memory 801 may be a read-only memory (read-only memory, ROM), a static storage device, a dynamic storage device, or a random access memory (random access memory, RAM).

The memory 801 may store a program. When the program stored in the memory 801 is executed by the processor 802, the processor 802 and the communication interface 803 are configured to perform the steps in the evaluation information determining methods in embodiments of this application.

The processor 802 is a circuit having a signal processing capability. In an implementation, the processor 802 may be a circuit having an instruction reading and running capability, for example, a central processing unit CPU, a microprocessor, a graphics processing unit (graphics processing unit, GPU) (which can be understood as a microprocessor), or a digital signal processor (digital signal processor, DSP). In another implementation, the processor 802 may implement a specific function by using a logical relationship of a hardware circuit, and the logical relationship of the hardware circuit is fixed or reconfigurable. For example, the processor 802 is an ASIC or a hardware circuit implemented by a programmable logic device PLD like an FPGA. In a reconfigurable hardware circuit, a process in which the processor loads a configuration document to implement configurations of the hardware circuit can be understood as a process in which the processor loads instructions to implement functions of some or all of the foregoing modules. In addition, the processor may be alternatively a hardware circuit designed for artificial intelligence, and can be understood as an ASIC, for example, a neural network processing unit (neural network processing unit, NPU), a tensor processing unit (tensor processing unit, TPU), or a deep learning processing unit (deep learning processing unit, DPU). The processor 802 is configured to execute a related program, to implement functions that need to be performed by the units in the evaluation information determining apparatus in this embodiment of this application, or perform the evaluation information determining methods in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the modules in the foregoing apparatus may be integrated, or may be independently implemented. In an implementation, the modules are integrated and implemented in a form of a system-on-a-chip (system-on-a-chip, SoC). The SoC may include at least one processor, configured to implement any one of the foregoing methods or implement functions of the modules of the apparatus. Types of the at least one processor may be different, including, for example, a CPU and an FPGA, a CPU and an artificial intelligence processor, a CPU and a GPU, and the like.

The communication interface 803 implements communication between the apparatus 800 and another device or a communication network by using a transceiver apparatus, for example, but not limited to, a transceiver. For example, data may be obtained through the communication interface 803.

The bus 804 may include a path for transmitting information between the components (for example, the memory 801, the processor 802, and the communication interface 803) of the apparatus 800.

It should be noted that although the apparatus 800 shown in FIG. 8 shows only the memory, the processor, and the communication interface, in a specific implementation process, a person skilled in the art should understand that the apparatus 800 further include other components necessary to implement normal running. In addition, a person skilled in the art should understand that, according to specific requirements, the apparatus 800 may further include hardware components for implementing other additional functions. Moreover, a person skilled in the art should understand that, the apparatus 800 may alternatively include only components necessary to implement embodiments of this application, and does not necessarily include all the components shown in FIG. 8.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

It should be understood that in descriptions of this application, unless otherwise specified, "/" indicates an "or" relationship between associated objects. For example, A/B may indicate A or B. A and B each may be in a singular or plural form. In addition, in the descriptions of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may represent a, b, c, a-b, a-c, b-c, or a-b-c, where a, b, and c each may be in a singular or plural form. In addition, for ease of clear description of the technical solutions in embodiments of this application, terms such as "first" and "second" are used in embodiments of this application to distinguish between same items having a basically same function and effect or similar items. A person skilled in the art can understand that the terms such as "first" and "second" are not used to limit a quantity and an execution sequence, and that the terms such as "first" and "second" do not indicate a definite difference. Moreover, in embodiments of this application, a term "example", "for example", or the like is used to represent giving an example, an illustration, or a description. Any embodiment or design scheme described as "example" or "for example" in embodiments of this application should not be construed as being preferred or having more advantages over other embodiments or design schemes. Exactly, use of the term "example", "for example", or the like is intended to present a related concept in a specific manner for ease of understanding.

In the several embodiments provided in this application, it should be understood that the disclosed systems, apparatuses, and methods may be implemented in other manners. For example, division into the units is merely logical function division and may be other division in actual implementation. For example, a plurality of units or components may be combined or may be integrated into another system, or some features may be ignored or not be performed. The displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units. To be specific, the parts may be located in one position, or may be distributed on a plurality of network units. Some or all of the units may be selected depending on an actual requirement to achieve the objectives of the solutions of embodiments.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a read-only memory (read-only memory, ROM); a random access memory (random access memory, RAM); a magnetic medium, for example, a floppy disk, a hard disk, or a magnetic tape; an optical medium, for example, a digital versatile disc (digital versatile disc, DVD); a semiconductor medium, for example, a solid-state disk (solid-state disk, SSD); or the like.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

**Claims**

1. An evaluation information determining method, comprising:

    sending a first request to a first network element, wherein the first request comprises first information, the first information comprises a preset parameter, and the preset parameter is used to generate evaluation information; and

    receiving evaluation information returned by the first network element, wherein the evaluation information is obtained by the first network element based on the first information, and the evaluation information is used to evaluate a service or a model.

2. The method according to claim 1, wherein the preset parameter is a classification error cost matrix and/or a class weight.

3. The method according to claim 1 or 2, wherein the first information further comprises an evaluation information calculation method, and the evaluation information calculation method comprises the preset parameter.

4. The method according to any one of claims 1 to 3, wherein the evaluation information is obtained by the first network element based on the first information and a test dataset.

5. The method according to claim 4, wherein the test dataset is obtained based on a test dataset identifier, and the first request further comprises the test dataset identifier.

6. The method according to claim 4, wherein the method further comprises:
    receiving a degree of association that is between the evaluation information and a second network element and that is returned by the first network element, wherein the degree of association is a proportion of data related to the second network element in the test dataset.

7. The method according to claim 4, wherein the test dataset is a dataset related to a second network element.

8. The method according to any one of claims 1 to 7, wherein the first request further comprises second information, the second information indicates to return evaluation association information, and the evaluation association information comprises evaluation information respectively corresponding to a plurality of time units in a time window and/or statistical information of the evaluation information respectively corresponding to the plurality of time units; and the receiving the evaluation information returned by the first network element comprises:
receiving the evaluation association information returned by the first network element.

9. The method according to any one of claims 1 to 8, wherein the service is an analytics service provided by the first network element, and the model is a machine learning model used by the first network element to provide an analytics service.

10. An evaluation information determining method, comprising:

receiving a first request sent by a second network element, wherein the first request comprises first information, the first information comprises a preset parameter, and the preset parameter is used to generate evaluation information;
obtaining evaluation information based on the first information, wherein the evaluation information is used to evaluate a service or a model; and
returning the evaluation information to the second network element.

11. The method according to claim 10, wherein the preset parameter is a classification error cost matrix and/or a class weight.

12. The method according to claim 10 or 11, wherein the first information further comprises an evaluation information calculation method, and the evaluation information calculation method comprises the preset parameter.

13. The method according to any one of claims 10 to 12, wherein the obtaining the evaluation information based on the first information comprises:
obtaining the evaluation information based on the first information and a test dataset.

14. The method according to claim 13, wherein the test dataset is obtained based on a test dataset identifier, and the first request further comprises the test dataset identifier.

15. The method according to claim 13, wherein the method further comprises:
returning a degree of association between the evaluation information and the second network element to the second network element, wherein the degree of association is a proportion of data related to the second network element in the test dataset.

16. The method according to claim 13, wherein the test dataset is a dataset related to the second network element.

17. The method according to any one of claims 10 to 16, wherein the obtaining the evaluation information based on the first information comprises:

sending the first information to a third network element; and
receiving the evaluation information sent by the third network element.

18. The method according to any one of claims 10 to 17, wherein the first request further comprises second information, the second information indicates to return evaluation association information, and the evaluation association information comprises evaluation information respectively corresponding to a plurality of time units in a time window and/or statistical information of the evaluation information respectively corresponding to the plurality of time units; and the returning the evaluation information to the second network element comprises:
returning the evaluation association information to the second network element based on the second information.

19. The method according to any one of claims 10 to 18, wherein the service is an analytics service provided by a first network element, and the model is a machine learning model used by the first network element to provide an analytics service.

20. An evaluation information determining method, comprising:

sending a second request to a first network element, wherein the second request comprises second information, the second information indicates the first network element to return evaluation association information, the evaluation association information comprises evaluation information respectively corresponding to a plurality of time units in a time window and/or statistical information of the evaluation information respectively corresponding to the plurality of time units, and the evaluation information is used to evaluate a service or a model; and receiving the evaluation association information returned by the first network element.

21. The method according to claim 20, wherein the second request further comprises the time window.

22. The method according to claim 20 or 21, wherein the second request further comprises first information, the first information comprises a preset parameter, the preset parameter is used to generate evaluation information, and the evaluation information is obtained by the first network element based on the first information.

23. The method according to claim 22, wherein the preset parameter is a classification error cost matrix and/or a class weight.

24. The method according to claim 22 or 23, wherein the first information further comprises an evaluation information calculation method, and the evaluation information calculation method comprises the preset parameter.

25. The method according to any one of claims 22 to 24, wherein the evaluation information is obtained by the first network element based on the first information and a test dataset.

26. The method according to any one of claims 20 to 25, wherein the service is an analytics service provided by the first network element, and the model is a machine learning model used by the first network element to provide an analytics service.

27. An evaluation information determining method, comprising:

receiving a second request sent by a second network element, wherein the second request comprises second information, the second information indicates to return evaluation association information, the evaluation association information comprises evaluation information respectively corresponding to a plurality of time units in a time window and/or statistical information of the evaluation information respectively corresponding to the plurality of time units, and the evaluation information is used to evaluate a service or a model; and returning the evaluation association information to the second network element based on the second information.

28. The method according to claim 27, wherein the second request further comprises the time window.

29. The method according to claim 27 or 28, wherein the second request further comprises first information, the first information comprises a preset parameter, the preset parameter is used to generate evaluation information, and the method further comprises:
obtaining evaluation information based on the first information.

30. The method according to claim 29, wherein the preset parameter is a classification error cost matrix and/or a class weight.

31. The method according to claim 29 or 30, wherein the first information further comprises an evaluation information calculation method, and the evaluation information calculation method comprises the preset parameter.

32. The method according to any one of claims 29 to 31, wherein the obtaining the evaluation information based on the first information comprises:
obtaining the evaluation information based on the first information and a test dataset.

33. The method according to any one of claims 29 to 32, wherein the obtaining the evaluation information based on the first information comprises:

sending the first information to a third network element; and
receiving the evaluation information sent by the third network element.

34. The method according to any one of claims 27 to 33, wherein the service is an analytics service provided by a first network element, and the model is a machine learning model used by the first network element to provide an analytics service.

35. An evaluation information determining method, comprising:

sending, by a second network element, a first request to a first network element, wherein the first request comprises first information, the first information comprises a preset parameter, and the preset parameter is used to generate evaluation information;
receiving, by the first network element, the first request sent by the second network element;
obtaining, by the first network element, evaluation information based on the first information, wherein the evaluation information is used to evaluate a service or a model;
returning, by the first network element, the evaluation information to the second network element; and
receiving, by the second network element, the evaluation information returned by the first network element.

36. The method according to claim 35, wherein the preset parameter is a classification error cost matrix and/or a class weight.

37. The method according to claim 35 or 36, wherein the first information further comprises an evaluation information calculation method, and the evaluation information calculation method comprises the preset parameter.

38. The method according to any one of claims 35 to 37, wherein the first request further comprises second information, the second information indicates to return evaluation association information, and the evaluation association information comprises evaluation information respectively corresponding to a plurality of time units in a time window and/or statistical information of the evaluation information respectively corresponding to the plurality of time units; the returning, by the first network element, the evaluation information to the second network element comprises:

returning, by the first network element, the evaluation association information to the second network element; and
the receiving, by the second network element, the evaluation information returned by the first network element comprises:
receiving, by the second network element, the evaluation association information returned by the first network element.

39. An evaluation information determining method, comprising:

sending, by a second network element, a second request to a first network element, wherein the second request comprises second information, the second information indicates the first network element to return evaluation association information, the evaluation association information comprises evaluation information respectively corresponding to a plurality of time units in a time window and/or statistical information of the evaluation information respectively corresponding to the plurality of time units, and the evaluation information is used to evaluate a service or a model;
receiving, by the first network element, the second request sent by the second network element;
returning, by the first network element, the evaluation association information to the second network element based on the second information; and
receiving, by the second network element, the evaluation association information returned by the first network element.

40. The method according to claim 39, wherein the second request further comprises first information, the first information comprises a preset parameter, the preset parameter is used to generate evaluation information, and the method further comprises:
obtaining, by the first network element, evaluation information based on the first information.

41. The method according to claim 40, wherein the preset parameter is a classification error cost matrix and/or a class weight.

42. The method according to claim 40 or 41, wherein the first information further comprises an evaluation information calculation method, and the evaluation information calculation method comprises the preset parameter.

43. An evaluation information determining apparatus, comprising a unit or a module configured to perform the method according to any one of claims 1 to 34.

44. An evaluation information determining system, comprising a unit or a module configured to perform the method according to any one of claims 1 to 9, and a unit or a module configured to perform the method according to any one of claims 10 to 19; or comprising a unit or a module configured to perform the method according to any one of claims 20 to 26, and a unit or a module configured to perform the method according to any one of claims 27 to 34.

45. A computer-readable storage medium, wherein the computer-readable storage medium stores program instructions, and when the program instructions are run on a computer, the computer is enabled to perform the method according to any one of claims 1 to 34.

46. A computer program product comprising program instructions, wherein when the program instructions are run on a computer, the computer is enabled to perform the method according to any one of claims 1 to 34.

NWDAF —— Nnf ——○ Any NF/Any network function

Any NF/Any network function —— Nnwdaf ——○ NWDAF

1(a)

1(b)

FIG. 1

Second network element

First network element

201: Send a first request, where the first request includes first information, the first information includes a preset parameter, and the preset parameter is used to generate evaluation information

————— Preset parameter ——————→

202: Receive the first request

203: Obtain evaluation information based on the first information, where the evaluation information is used to evaluate a service or a model

204: Send the evaluation information

←—————— Evaluation information ——————

205: Receive the evaluation information

FIG. 2

| Service consumer | AnLF NWDAF | MTLF NWDAF |
|---|---|---|

301: Send a first request, where the first request includes first information, and the first information includes an evaluation information calculation method and a class weight

302: Send a test dataset, the evaluation information calculation method, and the class weight

303: Generate evaluation information of an MTLF in the test dataset

304: Send the evaluation information

305: Send the evaluation information

FIG. 3

FIG. 4

```
┌──────────┐                                    ┌──────────────┐
│  Second  │                                    │ First network│
│ network  │                                    │   element    │
│ element  │                                    └──────────────┘
└──────────┘
```

501: Send a second request, where the second request includes second information, and the second information indicates the first network element to return evaluation association information

────────────── Second information ──────────────▶

502: Receive the second request

503: Return the evaluation association information based on the second information

◀────────── Evaluation association information

504: Receive the evaluation association information

FIG. 5

Evaluation information determining apparatus

Transceiver module
601

Processing module
602

FIG. 6

Evaluation information determining apparatus

Transceiver module
701

FIG. 7

Evaluation information
determining apparatus 800

Memory 801

Processor 802

Bus 804

Communication
interface 803

FIG. 8

## INTERNATIONAL SEARCH REPORT

| International application No. |
| --- |
| **PCT/CN2024/086061** |

**A. CLASSIFICATION OF SUBJECT MATTER**

H04L41/16(2022.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, VEN, CJFD, CNKI, BAIDU, IEEE, 3GPP: 数据分析, 功能, 网元, 实体, 装置, 设备, 请求, 响应, 返回, 参数, 代价, 矩阵, 权重, 计算方法, 算法, 服务, 模型, 评估, 评价, 多, 时间, 损失函数, 损失值, 性能, 测试数据, 测试样本, 标识, 标志, 标签, data analyse, function, element, entity, equipment, device, NWDAF, networkdata analytics function, request, response, return, parameter, cost, matrix, weight, compute, calculate, algorithm, service, model, evaluate, estimate, multiple, time, loss, performance, test data, test sample, id, identifier, indicator

**C. DOCUMENTS CONSIDERED TO BE RELEVANT**

| Category* | Citation of document, with indication, where appropriate, of the relevant passages | Relevant to claim No. |
| --- | --- | --- |
| X | CN 115835266 A (CHINA TELECOM CORP., LTD.) 21 March 2023 (2023-03-21) description, paragraphs 56-57 | 1, 4, 10, 13, 17, 35, 43-46 |
| X | CN 113128686 A (HUAWEI TECHNOLOGIES CO., LTD.) 16 July 2021 (2021-07-16) description, paragraphs 102-136 | 20-21, 26-28, 34, 39, 43-46 |
| A | CN 115004653 A (HUAWEI TECHNOLOGIES CO., LTD.) 02 September 2022 (2022-09-02) entire document | 1-46 |
| A | WO 2020224463 A1 (HUAWEI TECHNOLOGIES CO., LTD.) 12 November 2020 (2020-11-12) entire document | 1-46 |
| A | CN 110798360 A (TENCENT TECHNOLOGY (SHENZHEN) CO., LTD.) 14 February 2020 (2020-02-14) entire document | 1-46 |

☑ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **31 May 2024** | **28 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/086061** |

**C.    DOCUMENTS CONSIDERED TO BE RELEVANT**

| Category* | Citation of document, with indication, where appropriate, of the relevant passages | Relevant to claim No. |
|---|---|---|
| A | US 2019370684 A1 (SAS INSTITUTE INC.) 05 December 2019 (2019-12-05)<br>entire document | 1-46 |
| A | US 2017286854 A1 (GENERAL ELECTRIC COMPANY) 05 October 2017 (2017-10-05)<br>entire document | 1-46 |

Form PCT/ISA/210 (second sheet) (July 2022)

## INTERNATIONAL SEARCH REPORT
### Information on patent family members

International application No.

**PCT/CN2024/086061**

| Patent document cited in search report | | | Publication date (day/month/year) | Patent family member(s) | | | Publication date (day/month/year) |
|---|---|---|---|---|---|---|---|
| CN | 115835266 | A | 21 March 2023 | None | | | |
| CN | 113128686 | A | 16 July 2021 | WO | 2021143155 | A1 | 22 July 2021 |
| | | | | US | 2022351081 | A1 | 03 November 2022 |
| | | | | EP | 4080419 | A1 | 26 October 2022 |
| | | | | EP | 4080419 | A4 | 14 June 2023 |
| | | | | JP | 2023511327A | A | 17 March 2023 |
| CN | 115004653 | A | 02 September 2022 | WO | 2021155579 | A1 | 21 August 2021 |
| | | | | EP | 4087193 | A4 | 18 January 2023 |
| | | | | EP | 4087193 | A1 | 09 November 2022 |
| | | | | US | 2022368617 | A1 | 17 November 2022 |
| WO | 2020224463 | A1 | 12 November 2020 | CN | 111901135 | A | 06 November 2020 |
| | | | | CN | 111901135 | B | 15 October 2021 |
| CN | 110798360 | A | 14 February 2020 | WO | 2021088566 | A1 | 14 May 2021 |
| | | | | EP | 3989485 | A1 | 27 April 2022 |
| | | | | EP | 3989485 | A4 | 06 July 2022 |
| | | | | EP | 3989485 | B1 | 26 July 2023 |
| | | | | US | 2022046101 | A1 | 10 February 2022 |
| | | | | US | 11716399 | B2 | 01 August 2023 |
| | | | | HK | 40021635 | A0 | 06 November 2020 |
| | | | | HK | 40021635 | A1 | 23 September 2022 |
| | | | | CN | 110798360 | B | 28 June 2022 |
| US | 2019370684 | A1 | 05 December 2019 | US | 10600005 | B2 | 24 March 2020 |
| US | 2017286854 | A1 | 05 October 2017 | None | | | |

Form PCT/ISA/210 (patent family annex) (July 2022)

**REFERENCES CITED IN THE DESCRIPTION**

**Patent documents cited in the description**

- CN 202310534752